# EUROPEAN PATENT APPLICATION

(11) **EP 1 225 687 A1**
(43) Date of publication of application: **24.07.2002**
(21) Application number: 00969938.0
(22) Date of filing: 20.10.2000
(51) Int. Cl.: H02P 9/00, H02P 9/12, H02P 9/14, H02P 9/30

(54) **OUTPUT SWITCH CIRCUIT OF GENERATOR**

(30) Priority: 22.10.1999 JP 30142199
(71) Applicant: Mitsuba Corporation, Kiryu-shi, Gunma 376-8555 (JP)
(72) Inventor: UCHIYAMA, Hidekazu, Seta-gun, Gunma 371-0244 (JP)
(74) Representative: Rousset, Jean-Claude
(86) International application number: JP0007319
(87) International publication number: WO0129959

(57) **Abstract**

A generator capable of switching its power generation potential while controlling to keep a constant output by changing the effective flux of field coils. The generator, which is used with a motorcycle engine or a general-purpose engine, comprises three-phase generation coils (1), a bridge rectifier circuit (2) for rectifying the current generated by the coil, a thyristor gate control circuit (3) for controlling thyristors of the bridge rectifier circuit, field coils (4) arranged near the coils, and a field control circuit (5) for controlling the effective flux by means of the coils and a magnet. The bridge rectifier circuit includes a plurality of diodes and a series of thyristors (SCR1, SCR2) so that the thyristors may be turned on and off to change the number of effective ones of the coils (1).

## Description

### TECHNICAL FIELD OF THE INVENTION

The present invention relates to a technique for switching an output of a generator. More particularly, in an output control method of a generator employing a magnetic field method using a magnet only as a magnetic field source or employing a hybrid field control method using both of a magnet and a field coil, the present invention relates to a technique effectively applied to an output switch circuit of a generator, which is suitable for controlling a power generation output to a lower level.

### BACKGROUND OF THE INVENTION

Heretofore, a generator employing the hybrid field control method is constituted of, for example, a stator having three-phase power generation coils wound thereto, a rotor rotatably provided around the stator, a magnet provided to the rotor, a bridge rectifier circuit comprising a plurality of diodes for rectifying a current generated by the three-phase generation coils, a field control unit for controlling effective flux using the magnet and the field coil, and the like, and the generator can control the power generation output in a certain range by changing the magnitude and direction of the field current conducted to the field coil to change the effective flux of the generator.

However, in the above-mentioned generator employing the hybrid field control method, it is difficult to reduce the output completely to zero because of the use of a magnet as a magnetic field source. Also, it is required to increase the magnetic flux of the field coil in order to further suppress (reduce) the output, which results in the increase of the field coil in size (because it is necessary to increase an ampere-turn value). Such large coils hinder the reduction of the entire size of the generator.

Also, when the generator employing the hybrid field control method is used as, for example, a generator of a motorcycle, it is impossible to control the power generation output in a target range because of the wide range of its rotations to be used (e.g., 1000 rpm to 10000 rpm). In particular, such a generator has a problem that the output at high rotations can not be controlled properly.

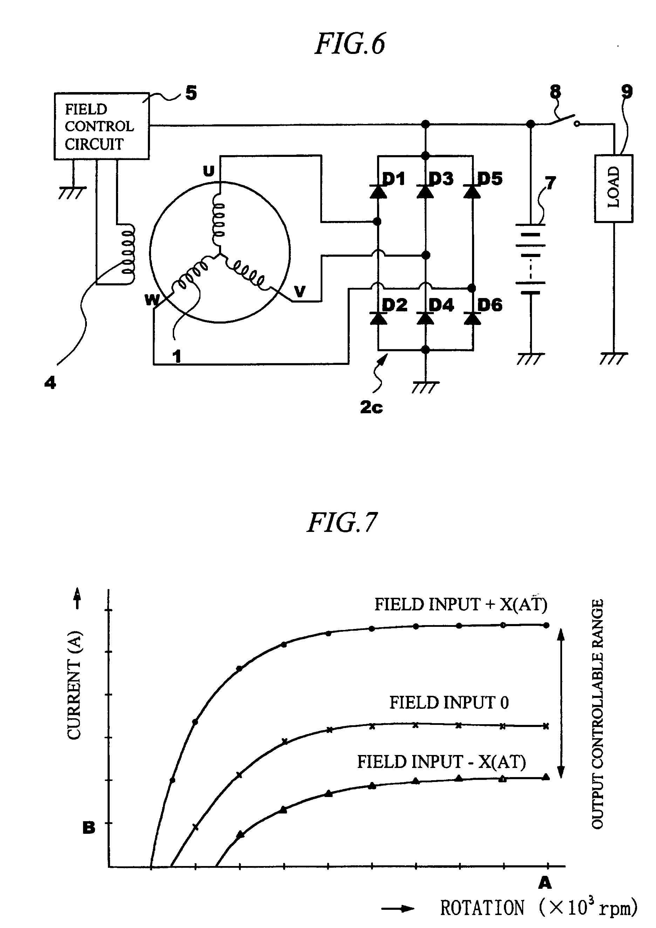

For example, in a generator employing the hybrid field control method and having a constitution as described in FIG. 6, the power generation output is controlled by means of a bridge rectifier circuit 2c comprising a plurality of diodes D1 to D6 for rectifying the current generated by three-phase generation coils 1 and of a field control circuit 5 for controlling the effective flux by using a magnet and a field coil 4, and the characteristic of the power generation output is shown in FIG. 7 for example. More specifically, in this example of the power generation characteristic, the range in which the output can be controlled is limited in a certain range even if the field output is controlled in a range of +X(AT) to -X(AT). In other words, it is impossible to control the output lower than B (A) at A (rpm).

In addition, as a technique relating to the control of the power generation output of a generator, Japanese Patent Laid-Open Publication No. 60-118095 is known in which an output of a three-phase generator is constituted of thyristors instead of conventionally-used bridge diodes, and six thyristors are controlled by the firing angle control or the so-called open regulator when controlling the power generation output. In this technique, the current more than required electric power is cut by the control of the thyristors in a state where the number of effective coils of the generator remains unchanged and the power generation potential is kept high. Meanwhile, in the present invention, a part of the diodes is replaced by a switching device and this switching device is turned on and off, thereby changing the number of effective coils, and thus switching the power generation potential of the generator itself. So, this technique and the present invention are different from each other.

Furthermore, since an open control by the firing angle control of the thyristors is used in the technique in the Publication, there is a possibility that the iron loss is increased. In the present invention, however, it is possible to control the power generation output while flowing the current and reducing the magnetic flux. Therefore, the present invention can cope with such problems as the iron loss.

Also, in a generator also functioning as a starter motor that is operated as a motor when starting an engine and is operated as a generator after starting the engine, when the generator satisfies the function of a starter motor, excessive current is inevitably generated as a generator. For its solution, a method of separately providing a starter and a generator coil or a method that the excessive current generated when generating electric power is short-circuited at a transistor positioning at a low side of a driver can be used. However, in the former, since each of the starter and the generator must have a coil and the driver and the rectifier circuit are separately provided, the size of the generator is increased. Also, in the latter, since heat generation is inevitable due to the short circuit of the excessive current, the latter is inefficient. In addition, the friction in the engine may be increased.

In such a circumstance, with focusing on the problems of the iron loss and the power generation potential of the generator itself as described above, an object of the present invention is to provide an output switch circuit of a generator capable of switching a power generation potential of a generator itself by appropriately arranging the configuration of a bridge rectifier circuit, and further, capable of controlling a power generation voltage to be constant by changing the number of effective fluxes of a field coil.

### DISCLOSURE OF THE INVENTION

For the solution of the above problems, in the present invention, a part of the devices in a bridge rectifier circuit is replaced from a diode to a switching device, and the switching device is turned on and off so as to change the number of the effective coils of the generator, more specifically, the power generation potential of the generator itself is changed. Furthermore, by combining this with the conventional hybrid field control in which effective flux is changed by the field coil, the excessive output that is a problem in the prior art can be suppressed by the magnetic flux from a smaller field coil than that in the prior art.

More specifically, in an aspect of an output switch circuit of a generator according to the present invention used in the magnetic field method using a magnet only as a magnetic field source, a bridge rectifier circuit is constituted of at least one switching device with regard to a bridge structure constituted of a plurality of diodes, and the output switch circuit is provided with a control unit for changing the number of effective coils of a multi-phase generation coil by turning on and off the switching device (power generation operation is performed in a state where the switching device is turned on or off). Therefore, the power generation potential of the generator itself can be switched by the control unit.

Also, in another aspect of an output switch circuit of a generator according to the present invention used in the hybrid field control method using a magnet and a field coil as magnetic field sources, a bridge rectifier circuit is constituted of at least one switching device with regard to a bridge structure constituted of a plurality of diodes, and the output switch circuit is provided with a field control unit for controlling effective flux by using a permanent magnet and a field coil arranged near the generation coil, in addition to the control unit for changing the number of effective coils of a multi-phase generation coil by turning on and off the switching device. Therefore, the power generation potential of the generator itself can be switched by the control unit, and also, the effective flux by the field coil is changed by the field control unit, thereby enabling to control the power generation voltage to be constant.

Further, in another aspect of an output switch circuit of a generator according to the present invention used in a multi-phase generator also functioning as a motor, which is operated as a motor when starting an engine and is operated as a generator after starting the engine, and which has a constitution that electric power is generated between an armature coil and a permanent magnet by the rotations of a rotor, a bridge rectifier circuit is constituted of at least one switching device with regard to that constituted of a plurality of diodes, and the output switch circuit is provided with a control unit for changing the number of effective coils of a multi-phase armature coil by turning on and off the switching device; and a field control unit for controlling effective flux by using a permanent magnet and a field coil arranged near the armature coil. Therefore, even when the output switch circuit of the present invention is applied to the multi-phase generator also functioning as a starter motor, the power generation potential of the generator itself can be switched by the control unit, and also, the effective flux by the field coil can be changed by the field control unit, thereby enabling to control the power generation voltage to be constant.

The control method in this constitution proceeds as follows. That is, rotations of a generator of an engine are detected by the control unit, the switching device is switched on and off at the predetermined rotations determined based on the number of the effective switching devices of the bridge rectifier circuit corresponding to the range of the rotations, and then the magnetic field control unit performs the field control, thereby enabling to change the magnitude and direction of a field current so as to control the generation voltage to be constant.

Also, another control method may be as follows. That is, a voltage to be controlled to be constant such as a battery voltage is previously monitored by the control unit, and when it becomes impossible to reduce the voltage by the field control by the field control unit, the control unit can turn off the switching device.

Thus, the output switch circuit of a generator according to the present invention can obtain the following advantages.
(1) In a field method using a magnet only as a magnetic field source, since at least one switching device is used in a bridge rectifier circuit and a control unit capable of changing the number of effective coils of multi-phase coils by turning on and off the switching device is provided, the generation capability of the generator itself can be switched. Therefore, the power generation capability can be brought under control.
(2) In a hybrid field control method using a magnet and a field coil as magnetic field sources, since a field control unit for controlling the effective flux by using a permanent magnet and a field coil is provided in addition to at least one switching device and the control unit of this device, the power generation potential of the generator itself can be switched and also the effective flux by the field coil can be changed. Therefore, it becomes possible to control the power generation voltage to be constant.
(3) Even in the case where the output switch circuit of the present invention is used in a multi-phase generator also functioning as a starter motor which is operated as a motor when starting an engine and is operated as a generator after starting the engine, since at least one switching device is used in a bridge rectifier circuit and a control unit of this switching device and a field control unit for controlling effective flux by using a permanent magnet and a field coil are provided, the power generation potential of the generator itself can be switched and also the effective flux by the field coil can be changed. Therefore, it becomes possible to control the power generation voltage to be constant.
(4) According to (2) and (3), wider output control can be achieved in comparison to the output control performed by only the input to the field coil. A particular effect can be obtained in the control to suppress the excessive output.
(5) According to (2) and (3), since the magnetomotive force of the field coil can be reduced and the size of the generator can be also reduced, the miniaturization, the weight saving, and the cost down can be achieved.
(6) According to (2) and (3), since it is possible to reduce the energy applied to the field coil, the power generation efficiency as a system can be improved. Meanwhile, if it is not required to improve the power generation efficiency, the reduction of the field input can be achieved.
(7) According to (2) and (3), since it is possible to reduce the energy applied to the field coil, the heat generated in the field coil can be reduced.

### BRIEF DESCRIPTION OF THE DRAWINGS

FIG. 1 is a circuit diagram of a control system including an output switch circuit of a generator according to the first embodiment of the present invention;
FIG. 2 is a characteristic diagram showing the characteristic of the power generation output of a generator in the first embodiment of the present invention;
FIG. 3 is a circuit diagram showing a modification example of the output switch circuit of the generator in the first embodiment of the present invention;
FIG. 4 is a circuit diagram showing another modification example of the output switch circuit of the generator in the first embodiment of the present invention;
FIG. 5 is a circuit diagram of a control system including an output switch circuit of a generator also functioning as a starter motor according to the second embodiment of the present invention;
FIG. 6 is a circuit diagram of a control system including an output switch circuit of a generator serving as a subject of the present invention; and
FIG. 7 is a characteristic diagram showing the characteristic of the power generation output of a generator serving as a subject of the present invention.

### BEST MODE FOR CARRYING OUT THE INVENTION

Hereinafter, embodiments of the present invention will be described based on the drawings. Note that components having the same function are denoted by the same reference symbol throughout the drawings for describing the embodiments, and the repetitive description thereof will be omitted.

### (First Embodiment)

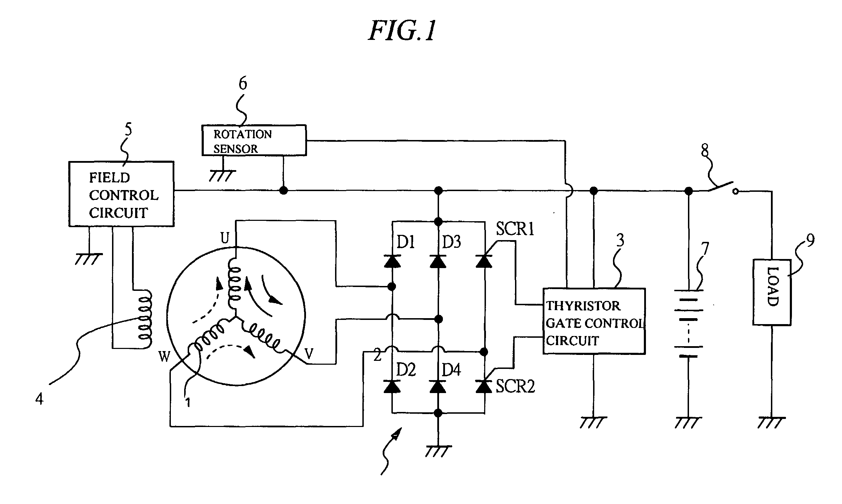

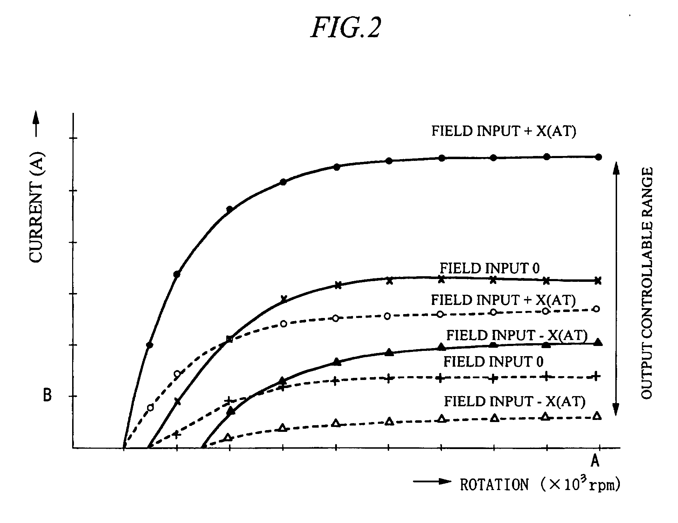

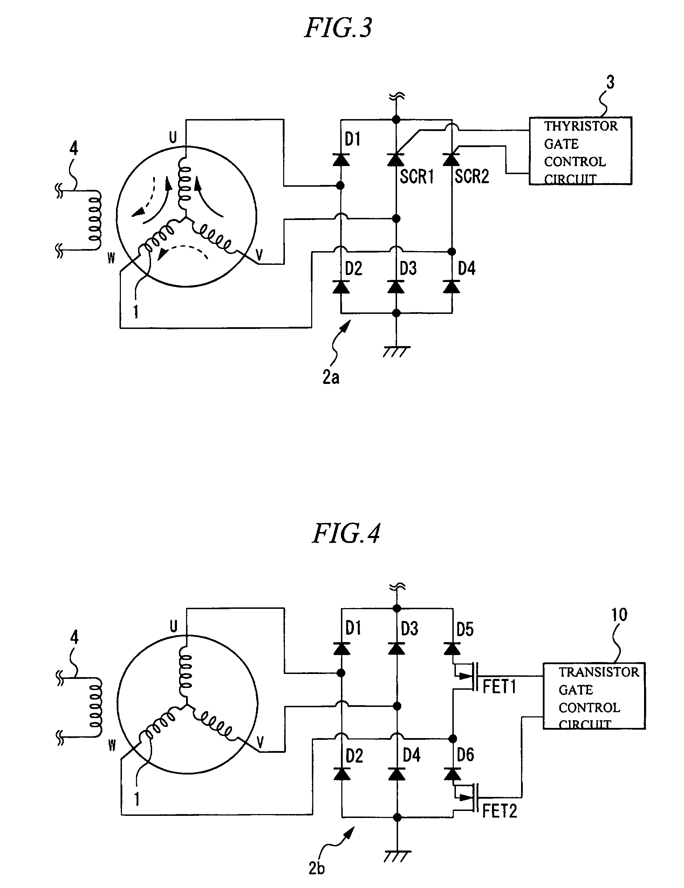

FIG. 1 is a circuit diagram showing a control system including an output switch circuit of a generator according to the first embodiment of the present invention, FIG. 2 is a characteristic diagram showing the characteristic of the power generation output in a generator of this embodiment, and FIGs. 3 and 4 are circuit diagrams showing modification examples of the output switch circuit.

First, descriptions will be made for an example of a constitution of a control system including an output switch circuit of a generator in this first embodiment based referring to FIG. 1. The generator in this embodiment is used by connecting with, for example, a motorcycle engine or a general-purpose engine, and is provided with Y-connected three-phase generation coils 1, a bridge rectifier circuit 2 for rectifying the current generated by the generation coils 1, a thyristor gate control circuit (control unit) 3 for controlling thyristors of the bridge rectifier circuit 2, a field coil 4 arranged near the generation coils 1, a field control circuit (field control unit) 5 for controlling the effective flux by means of the filed coil 4 and a magnet (permanent magnet), a rotation sensor 6 for detecting the number of the rotations, a battery 7, and the like. In this generator, an electric power is generated between the generation coil 1 and the magnet by the rotation of the generator, and the generated current is rectified and then supplied to a load 9 through a switch 8.

Though not shown, in this generator, the three-phase generation coils 1 composed of U-phase, V-phase, and W-phase coils are wound to each stator, and a rotor opposite to the stator is rotatably provided, respectively. This rotor is provided with a plurality of magnets magnetized to the same pole and field parts having a plurality of controlling poles made of a magnetic material between the magnets. Magnetic flux forming a closed magnetic circuit through the controlling poles of the field part and combined with the magnetic flux by the magnet is generated by the field coil 4 by the control of the field control circuit 5. In addition, the rotor of the generator is directly linked with a crankshaft of an engine.

The bridge rectifier circuit 2 is formed with diodes and with at least one switching device in contrast to the bridge structure composed of a plurality of diodes. In this constitution, one of three bridge lines is replaced by thyristors SCR1 and SCR2 functioning as switching devices, and the bridge rectifier circuit 2 is constituted of four diodes D1 to D4 and the two thyristors SCR1 and SCR2. Cathode sides of the diodes D1 and D3 and that of the thyristor SCR1 are commonly connected to the power supply potential, and the anode sides of the diodes D2 and D4 and that of the thyristor SCR2 are commonly connected to the ground potential, respectively. Anodes of the diodes D1 and D3 and that of the thyristor SCR1 and the cathodes of the diodes D2 and D4 and that of the thyristor SCR2 are respectively connected to each other. Each connection node between the diodes D1 and D2, diodes D3 and D4, and thyristors SCR1 and DCR2 is connected to the U phase, V phase, and W phase of the generation coils 1, respectively.

Each of the gates of the thyristors SCR1 and SCR2 of the bridge rectifier circuit 2 is connected to the thyristor gate control circuit 3 by which the gates are controlled. The thyristor gate control circuit 3 turns on and off the thyristors SCR1 and SCR2 to change the number of the effective coils of the three-phase generation coils 1, which makes it possible to switch the power generation potential of the generator itself. Also, a rotation sensor 6 is connected to the thyristor gate control circuit 3 to detect the rotations of the generator and the thyristors SCR1 and SCR2 are switched on and off at the predetermined rotations based on the number of the effective thyristors SCR1 and SCR2 of the bridge rectifier circuit 2 corresponding to the range of the rotations.

The field coil 4 is connected to the field control circuit 5, and the field control circuit 5 performs the magnetic field control of the field coil 4 to generate the magnetic flux to be combined with the magnetic flux by a magnet, and then, the magnitude and the direction of the field current is changed so as to keep the voltage of the battery 7 almost constant, thereby enabling to control the power generation voltage to be constant.

As described above, in the control system including the output switch circuit of a generator in this embodiment, the hybrid field control method in which a magnet and the field coil 4 are used as a magnetic field source is adapted. In this hybrid field control method, the power generation potential of the generator itself can be switched by the thyristor gate control circuit 3, and further, the power generation voltage can be controlled to be constant by changing the effective flux by the field coil 4 by the field control circuit 5. Note that it is also possible to switch the power generation potential of the generator itself even in the magnetic field method using a magnet only as a magnetic field source without operating or providing the field coil 4 and the field control circuit 5.

Next, the operation of the present invention will be described. First, descriptions will be made for the operation of the generator. The generator is started up by starting the engine directly linked with a rotor via a crankshaft. More specifically, when the engine is started, the rotor linked with the crankshaft rotates around a stator. Thus, the magnetic flux of the controlling pole formed by the magnetic flux of the magnet as a rotor and by the conduction to the field coil 4 is to form a rotating magnetic field, and thereby, the generation coil 1 is turned off. As a result, an electromotive force is generated in the generation coils 1. The electromotive force of the generation coils 1 is charged in the battery 7 after being rectified in the bridge rectifier circuit 2 or supplied to the desired load 9 after taken out through the switch 8.

Subsequently, descriptions will be made for an example of a control method of a generator. There are two kinds of methods of controlling the generator as described below.
(a) Rotations of a generator or an engine is detected by the rotation sensor 6, and the thyristors SCR1 and SCR2 of the bridge rectifier circuit 2 are turned on and off by the thyristor gate control circuit 3 depending on the predetermined range of the rotations. For example, both thyristors SCR1 and SCR2 are turned on when the rotations are in the range of 0 to A (rpm), the thyristor SCR1 of the two is turned off when the rotations are in the range of A to B (rpm), and both thyristors SCR1 and SCR2 are turned off when the rotations are in the range of B or more (rpm). In this manner, the number of effective thyristors SCR1 and SCR2 of the bridge rectifier circuit 2 is determined in advance depending on the range of the rotations. Then, the current flowing through the field coil 4 is controlled by the field control circuit 5 to control the magnetic field. More specifically, the magnitude and direction of the field current is changed so as to make the voltage of the battery 7 constant.
(b) A voltage, such as the voltage of the battery 7, to be controlled to be constant is previously monitored, and when it becomes impossible to reduce the voltage by the field control of the current flowing through the field coil 4 by the field control circuit 5, the thyristor gate control circuit 3 turns off the thyristors SCR1 and SCR2 of the bridge rectifier circuit 2.

Subsequently, in the constitution shown in FIG. 1 and according to the control method of the generator described above, the switch on and off of the thyristors SCR1 and SCR2 of the bridge rectifier circuit 2 by the thyristor gate control circuit 3 can be performed as described below.
(1) When both of the thyristors SCR1 and SCR2 are in an ON state, the three-phase full-wave rectification is performed, and thus, the generator is operated as a three-phase generator.
(2) When both of the thyristors SCR1 and SCR2 are in an OFF state, only the current represented by arrows (solid line) in FIG. 1 is flown. Thus, the three-phase generator performs the single-phase full-wave rectification, thereby enabling to bring under control the power generation capability.
(3) When only the thyristor SCR1 is turned off, the current flow represented by the arrows (dotted line) is allowed in addition to that of (2). Note that when only the thyristor SCR2 is turned off, though the directions thereof are reversed, the effective current flow is the same as that in the case where only the thyristor SCR1 is turned off.

Therefore, the switch on and off of the thyristors SCR1 and SCR2 makes it possible to control the capability of the generator. In addition, the control of the current flowing through the field coil 4 makes it possible to control the power generation output in a wider range than that in the prior art.

For example, the characteristic of the power generation output at this time is shown in FIG. 2. More specifically, contrary to the example shown in FIG. 7 in which the controllable range of the output is limited in a certain range even if the field output is controlled in a range of +X(AT) to -X(AT), it becomes possible to control the output lower than B (A) at A (rpm) in this example as shown in FIG. 2. In other words, the controllable range of the output can be expanded to the range represented by dotted lines (both of the thyristors SCR1 and SCR2 are in an OFF state).

Next, descriptions will be made for a modification example of the bridge rectifier circuit of the output switch circuit referring to FIGs. 3 and 4. The constitution of FIG. 3 is different from that of FIG. 1 in the position of the bridge lines replaced by thyristors, and FIG. 4 shows an example in which field effect transistors are used instead of the thyristors.

As shown in FIG. 3, one sides of two bridge lines out of three bridge lines in a bridge rectifier circuit 2a are replaced by thyristors SCR1 and SCR2. Cathode side of the diode D1 and those of the thyristors SCR1 and SCR2 are commonly connected to the power supply potential, and the anode sides of the diodes D2 to D4 are commonly connected to the ground potential. The anode of the diode D1 and those of the thyristors SCR1 and SCR2 and the cathodes of the diodes D2 to D4 are respectively connected to each other. Each connection nodes between the diodes D1 and D2, the thyristor SCR1 and the diode D3, and thyristor SCR2 and the diode D4 is connected to the U phase, V phase, and W phase of the generation coils 1, respectively.

In the constitution of the bridge rectifier circuit 2a, when both of the thyristors SCR1 and SCR2 are in an ON state by the control of the thyristor gate control circuit 3, the three-phase full-wave rectification is performed. When both of the thyristors SCR1 and SCR2 are in OFF state, the current flow represented by the arrows (solid line) in FIG. 3 is only allowed. When only the thyristor SCR1 is in OFF state, the current flow represented by the arrow (dotted line) is added to that represented by the arrows (solid line). As described above, the capability of the generator can be changed by the switch on and off of the thyristors SCR1 and SCR2.

As shown in FIG. 4, field effect transistors FET1 and FET2 are used in a bridge rectifier circuit 2b, and the field effect transistors FET1 and FET2 are connected to diodes D5 and D6 in series so as to have the same forward direction. The cathode sides of the diodes D1, D3, and D5 are commonly connected to the power supply potential. The anodes of the diodes D1 and D3 and the cathodes of the diodes D2 and D4 are respectively connected to each other, and the anode sides of the diodes D2 and D4 are commonly connected to the ground potential. The anode of the diode D5 is connected to the source of the field effect transistor FET1 and the drain of the field effect transistor FET1 is connected to the cathode of the diode D6. Further, the anode of the diode D6 is connected to the source of the field effect transistor FET2 and the drain of the field effect transistor FET2 is connected to the ground potential. Each connection node between the diodes D1 and D2, diodes D3 and D4, and field effect transistor FET1 and the diode D6 is connected to the U phase, V phase, and W phase of the generation coils 1, respectively.

In the constitution of the bridge rectifier circuit 2b, the same operations as those obtained in the constitution shown in FIG. 1 can be achieved by turning on or off both of the field effect transistors FET1 and FET2 by the control of a transistor gate control circuit 10, or turning off only one of the transistors. Therefore, the switch on and off of the field effect transistors makes it possible to change the capability of the generator.

As described above, the generator of this embodiment is provided with: the bridge rectifier circuit 2, 2a, or 2b in which at least one of the plurality of diodes of the bridge structure is replaced by a switching device such as a thyristor and a field effect transistor; the thyristor gate control circuit 3 of the thyristor; the transistor gate control circuit 10 of the field effect transistor; the field coil 4; and the field control circuit 5. Therefore, it is possible to control the generator by the use of the thyristor gate control circuit 3 and the field control circuit 5 or the transistor gate control circuit 10 and the field control circuit 5. Accordingly, wider output control can be achieved in comparison to the output control by only the input by means of the magnitude and direction of the current flown into the field coil 4. A particular effect can be obtained in the control to suppress the excessive output.

Moreover, since the capability of the generator is changed in the thyristor gate control circuit 3 or in the transistor gate control circuit 10 and then the generator is controlled, the magnetomotive force of.the field coil 4 can be reduced. Therefore, the size of the generator can be reduced. As a result, the miniaturization, the weight saving, and the cost down can be achieved.

Also, since it is possible to reduce the energy applied to the field coil 4, the power generation efficiency as a system can be improved. Meanwhile, if it is not required to improve the power generation efficiency, the reduction of the field input can be achieved. Furthermore, the heat generated in the field coil 4 can be reduced.

### (Second Embodiment)

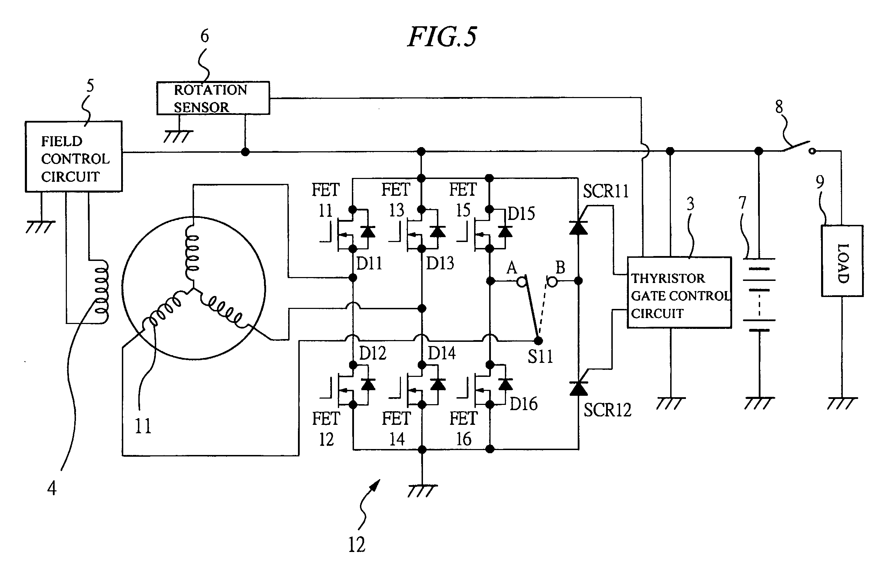

FIG. 5 is a circuit diagram of a control system including an output switch circuit of a generator also functioning as a starter motor according to the second embodiment of the present invention.

The generator of this embodiment is used by connecting with, for example, a motorcycle engine or a general-purpose engine. The output switch circuit of this embodiment is different from that of the first embodiment in that the output switch circuit of the second embodiment is applied to a multi-phase generator also functioning as a starter motor, which is operated as a motor when starting an engine and is operated as a generator after starting the engine. In this multi-phase generator, the electric power is generated between the permanent magnet and the armature coil by the rotation of the rotor.

More specifically, as exemplified in FIG. 5, the multi-phase generator also functioning as a starter motor of this embodiment is provided with a three-phase armature coil 11 made of Y-connected brushless motors, a brushless motor driver and bridge rectifier circuit 12 for controlling the conduction of the armature coil 11 and rectifying the current generated by the armature coil 11, and with, as similar to those in the first embodiment, the thyristor gate control circuit (control unit) 3, the field coil 4, the field control circuit (field control unit) 5, the rotation sensor 6, the battery 7, and with a rotor position sensor (not shown), and a FET gate drive circuit (not shown) for driving a motor. Also, the multi-phase generator is operated as a motor when starting an engine and operated as a generator after starting the engine. Further, the multi-phase generator has such a constitution that an electric power is generated between the magnet and the armature coil 11 by the rotation of the generator and the generated current is rectified and then supplied to the load 9 through the switch 8.

The brushless motor driver and bridge rectifier circuit 12 has a conduction control function for conducting a current for forming a rotating magnetic field to the armature coil 11 based on the detection result by the rotor position sensor and has a rectification function for rectifying the current generated in the armature coil 11. Also, the brushless motor driver and bridge rectifier circuit 12 comprises six field effect transistors FET 11 to FET16, six parasitic diodes D11 to D16 connected in parallel to the field effect transistors FET 11 to FET16, a switch S11 switched depending on whether the generator is operated as a starter motor or a generator, two thyristors SCR11 and SCR12 functioning as switching devices when the generator is operated as a generator. The brushless motor driver and bridge rectifier circuit 12 has a constitution in which at least one of the plurality of parasitic diodes D11 to D16 constituting the bridge structure is replaced by a switching device at the time when the generator is operated as a generator. In this example, one line of the three lines of the bridge lines is replaced by the thyristors SCR11 and SCR12.

In the multi-phase generator also functioning as a starter motor constituted as described above, when operated as a starter motor, the switch S11 of the brushless motor driver and bridge rectifier circuit 12 is connected to the A side, gate signals are transmitted from the FET gate drive circuit to the field effect transistors FET11 to FET16 based on the signals from the rotor position sensor so as to form the rotating magnetic field, and the commutation control of the conduction to the armature coil 11 of the brushless motor is performed to rotate the brushless motor in the desired direction. The engine directly linked with the rotor via a crankshaft is thereby started.

After starting the engine (when the rotations are over the predetermined value), when operated as a generator, the switch S11 of the brushless motor driver and bridge rectifier circuit 12 is switched to the B side, and thus, one line (FET 15 and FET16) of the parasitic diodes D11 to D16 in the three lines of the field effect transistors FET 11 to FET16 are replaced by the thyristors SCR11 and SCR12. With such a constitution, similar to the first embodiment, the three-phase full-wave rectification is performed when both of the thyristors SCR11 and SCR12 are turned on by the control of the thyristor gate control circuit 3, and the single-phase full-wave rectification is performed when both of the thyristors SCR11 and SCR12 are turned off by the control of the thyristor gate control circuit 3. In short, it is possible to control the capability of the generator.

Consequently, similar to the first embodiment, the thyristors SCR11 and SCR12 are switched on and off by the thyristor gate control circuit 3 to change the number of effective coils of the three-phase armature coils 11, thereby enabling to switch the power generation potential of the generator itself. In addition, the magnetic field of the field coil 4 is controlled by the field control circuit 5 and the magnitude and the direction of the field current is changed so as to keep the voltage of the battery 7 almost constant, thereby enabling to control the generation voltage to be constant.

According to the generator also functioning as a starter motor in this embodiment, the generator is provided with a brushless motor driver and bridge rectifier circuit 12 capable of replacing at least one parasitic diode by a switching device such as a thyristor in a bridge structure constituted of a plurality of parasitic diodes, more specifically, capable of replacing one line of the parasitic diodes D11 to D16 in the three lines of the field effect transistors FET 11 to FET16 by the thyristors SCR11 and SCR12 by means of the switch S11 at the time when the generator is operated as a generator; the thyristor gate control circuit 3 of this thyristor; the field coil 4; and the field control circuit 5. Therefore, since the control using both of the thyristor gate control circuit 3 and the field control circuit 5 can be performed, the same advantages as those of the first embodiment can be obtained.

It goes without saying that the present invention is not limited to the foregoing embodiments and various changes and modifications can be made therein within the scope of the invention. For example, in the foregoing embodiments, descriptions are made for the examples in which the output switch circuit of a generator of the present invention is applied to a generator employing a hybrid field control method using a magnet and a field coil as a magnetic field source and to a generator also functioning as a starter motor employing the same hybrid field control method. However, the application of the present invention is not limited to this. It is also possible to apply the present invention to a generator employing a field method using a magnet only as a magnetic field source without providing any field coil and field control circuit and also to a generator also functioning as a starter motor employing the same field method.

Also in the generator employing the field method using a magnet only or in the generator also functioning as a starter motor employing the same, a bridge rectifier circuit or a brushless motor driver and bridge rectifier circuit is constituted of at least one switching device in contrast to that constituted of a plurality of diodes, and a control unit for changing the number of effective coils of a multi-phase generation coils by turning on and off the switching device is provided. Therefore, the power generation potential of the generator itself can be switched.

In addition, IGBT can be used as a switching device instead of a thyristor. Also, a mechanical switch such as a relay can be used instead of a field effect transistor.

Further, in the foregoing embodiments, descriptions have been made for the case where two diodes of the bridge structure are replaced by the switching devices. However, it is also preferable to replace only one diode. Furthermore, any of the diodes in the three bridge lines can be replaced.

Also, the connection of the multi-phase generation coils is not limited to the star connection (Y-connection) and delta connection is also available. Further, the output switch circuit of the present invention can be applied to the multi-phase generator having four or more phases.

As described above, the present invention can reduce the capability of a generator by turning off a switching device at the time of excessive output to partially limit the multi-phase current of the generator. In addition to this, in the case where a field coil is provided, the output is controlled to be constant by the field coil. Therefore, it becomes possible to control the power generation output in a wider range than that in the prior art. More specifically, the control range of the power generation output is expanded to the lower side.

Also, since the magnetic field is controlled in a state where the generation capability is previously lowered, the magnetomotive force of the field coil can be lowered than that in the prior art. Therefore, it becomes possible to make the field coil smaller in size.

### INDUSTRIAL APPLICABILITY

As described above, the output switch circuit of a generator according to the present invention can be effectively used in, for example, an output control method of a generator employing a field method using a magnet only as a magnetic field source or a hybrid field control method in which both of a magnet and a field coil are used. More particularly, the present invention can be widely applied to an output switch circuit of a generator which is preferably used to control the power generation output to a lower level.

## Claims

1. An output switch circuit for a generator, used in a multi-phase generator which comprises a stator having a multi-phase generation coil wound thereto; a rotor rotatably provided so as to be opposite to said stator; a field part provided to said rotor; and a bridge rectifier circuit comprising a plurality of diodes, said bridge rectifier circuit functioning to rectify a current generated by said multi-phase generation coil, said multi-phase generator adopted to generate electric power between said generator coil and said field part by means of the rotation of said rotor, **characterized in that**:
said bridge rectifier circuit comprises at least one switching device with regard to said bridge rectifier circuit comprising a plurality of diodes; and
said output switch circuit of a generator comprises a control unit for switching a power generation potential of the generator itself by switching on and off said switching device to change the number of effective coils of said multi-phase generation coil.

2. An output switch circuit for a generator, used in a multi-phase generator which comprises a stator having a multi-phase generation coil wound thereto; a rotor rotatably provided so as to be opposite to said stator; a field part provided to said rotor; and a bridge rectifier circuit comprising a plurality of diodes, said bridge rectifier circuit functioning to rectify a current generated by said multi-phase generation coil, said multi-phase generator adopted to generate electric power between said generator coil and said field part by means of the rotation of said rotor, **characterized in that**:
said bridge rectifier circuit comprises at least one switching device with regard to said bridge rectifier circuit comprising a plurality of diodes; and
said output switch circuit of a generator comprises a control unit for switching a power generation potential of the generator itself by switching on and off said switching device to change the number of effective coils of said multi-phase generation coil; and a field control unit for controlling a generation voltage to be constant by controlling an effective flux by using both of said field part and a field coil arranged adjacent to said generation coil.

3. An output switch circuit for a generator, used in a multi-phase generator also functioning as a starter motor which comprises a stator having a multi-phase armature coil wound thereto; a rotor rotatably provided so as to be opposite to said stator; a field part provided to said rotor; a position detector for detecting a position of said rotor; a conduction control unit for conducting a current for forming a rotating magnetic field to said multi-phase armature coil based on the detection result by said position detector; and a bridge rectifier circuit comprising a plurality of diodes, said bridge rectification circuit functioning to rectify the current generated in said armature coil, said multi-phase generator also functioning as a starter motor adopted to generate electric power between said generator coil and said field part by means of the rotation of said rotor, and said multi-phase generator operated as a starter motor when starting an engine and operated as a generator after starting the engine, **characterized in that**:
said bridge rectifier circuit comprises at least one switching device with regard to said bridge rectifier circuit comprising a plurality of diodes; and
said output switch circuit of a generator comprises a control unit for switching a power generation potential of the generator itself by switching on and off said switching device to change the number of effective coils of said multi-phase armature coil.

4. The output switch circuit for a generator according to claim 3,
wherein said output switch circuit of a generator further comprises a magnetic field control unit for controlling a generation voltage to be constant by controlling effective flux by using both of said field part and a field coil arranged near said armature coil.

5. The output switch circuit for a generator according to claim 2 or 4,
wherein rotations of said generator or said engine are detected by said control unit, said switching device is switched on and off at a predetermined rotations determined based on the number of the effective switching devices of said bridge rectifier circuit corresponding to the range of the rotations, and then said field control unit performs the field control, thereby changing the magnitude and direction of a field current so as to control a generation voltage to be constant.

6. The output switch circuit for a generator according to claim 2 or 4,
wherein a voltage such as a battery voltage to be controlled to be constant is previously monitored by said control unit, and when it becomes impossible to reduce the voltage by the field control by said field control unit, said control unit turns off said switching device.
